# EUROPÄISCHE PATENTSCHRIFT

(11) **EP 2 473 818 B1**
(45) Veröffentlichungstag und Bekanntmachung des Hinweises auf die Patenterteilung: **09.04.2014**
(21) Anmeldenummer: 10752312.8
(22) Anmeldetag: 02.09.2010
(51) Int. Cl.: G01B 21/32, F03D 11/00

(54) **VORRICHTUNG ZUR MESSUNG UND/ODER ERFASSUNG VON DISTANZEN UND DISTANZÄNDERUNGEN SOWIE VORRICHTUNG ZUR MESSUNG UND/ODER ERFASSUNG VON MECHANISCHEN BELASTUNGEN**
DEVICE FOR MEASURING AND/OR DETECTING DISTANCES AND DISTANCE CHANGES AND DEVICE FOR MEASURING AND/OR DETECTING MECHANICAL LOADS
DISPOSITIF POUR MESURER ET/OU ENREGISTRER DES DISTANCES ET DES VARIATIONS DE DISTANCE ET DISPOSITIF POUR MESURER ET/OU ENREGISTRER DES CONTRAINTES MÉCANIQUES

(30) Priorität: 02.09.2009 DE 102009039664; 09.06.2010 DE 102010023250
(43) Veröffentlichungstag der Anmeldung: 11.07.2012
(73) Patentinhaber: Baumer Innotec AG, 8500 Frauenfeld (CH)
(72) Erfinder: BRÄNDLE, Daniel, 8500 Frauenfeld (CH); HUSISTEIN, Roger, CH-9245 Oberbüren (CH); NIGG, Roger, CH-8500 Frauenfeld (CH)
(74) Vertreter: Strauss, Steffen
(86) Internationale Anmeldenummer: PCT/EP2010/005380
(87) Internationale Veröffentlichungsnummer: WO 2011/026616

(56) Entgegenhaltungen:
- EP-A2- 1 788 240
- WO-A2-2010/032134
- FR-A2- 2 554 591
- US-A- 3 899 922
- US-A1- 2009 232 635
- US-B1- 6 834 552

## Beschreibung

Die Erfindung betrifft Vorrichtungen zur Messung und/oder Erfassung von Distanzen und Distanzänderungen sowie Vorrichtungen zur Messung und/oder Erfassung von mechanischen Belastungen.

Aus dem Stand der Technik sind Dehnmesstransformatoren bekannt, welche Dehnungsmessstreifen, DMS, umfassen, die jedoch in vielen Fällen die für manche Anwendungen erwünschte Genauigkeit nicht erreichen können. Für höhere Genauigkeiten können auch auf Dehnmeßstreifen basierende Dehntransformatoren verwendet werden. Diese sind aber wiederum deutlich teurer.

Wird ein Körper mechanisch belastet, kommt es in der Regel, abhängig von den Belastungen zu mehr oder weniger starken Änderungen von dessen Form oder äußeren Abmessungen.

In vielen Fällen können diese Änderungen der jeweiligen Belastung zugeordnet werden und sind somit auch ein Maß für diese Belastung des Körpers. Eine Überwachung der Belastung, somit ein Belastungsmonitoring, kann folglich durch Erfassung oder Messung der äußeren Abmessungen des jeweiligen Körpers durchgeführt werden.

Eine Aufgabe der Erfindung liegt somit darin, die Messgenauigkeit insbesondere von Vorrichtungen zur Erfassung und/oder Messung von Distanzen und/oder Distanzänderungen sowie ein Verfahren zur Erfassung und/oder Messung von Distanzen und/oder Distanzänderungen bereitzustellen, die eine höhere Messgenauigkeit ermöglichen. Eine weitere Aufgabe der Erfindung besteht in der Bereitstellung einer Vorrichtung und eines Verfahrens mit welchen mechanische Belastungen von Bauteilen erfasst und/oder gemessen werden können.

Die Aufgabe wird mittels einer Vorrichtung und eines Verfahrens mit den Merkmalen der unabhängigen Ansprüche 1 und 9 gelöst. Demgemäß umfasst eine erfindungsgemäße Vorrichtung zur Erfassung und/oder Messung von Distanzen und/oder Distanzänderungen eine Einrichtung zur Übersetzung von Distanzänderungen, sowie zumindest einen Sensor zur Erfassung und/oder Messung von Distanzen und/oder Distanzänderungen.

Eine Grundidee der Erfindung liegt darin, durch mechanische Übersetzungsstrukturen Belastungen, welche in Form von Distanzänderungen messbar sind, so zu verstärken, dass eine genauere Messung erzielt werden kann. Dabei ermöglichen die verstärkten, d.h. vergrößerten Distanzen, die zu messen sind, eine höhere Messgenauigkeit, da ein vorgegebener Messfehler bei größeren zu messenden Distanzen eine geringe Auswirkung hat.

Diese Messung, also die Messung von Distanzänderungen oder Distanzen, wird durch Belastungsmonitore erreicht, welche mechanischen Übersetzungsstrukturen aufweisen, die, induktive Sensoren, wahlweise integriert, beinhalten und die sich vorzugsweise beide wiederum in einem Sensorgehäuse befinden. Die Übersetzungsstrukturen und der oder die Sensoren können also in einem gemeinsamen Sensorgehäuse untergebracht sein.

Die Struktur, die die aus der Belastung entstandene Wegänderung des Bauteils mit entsprechender mechanischer Struktur in eine um Faktoren größere Distanzmessung umzusetzt und diese Distanzänderung physikalisch erfasst, kann vorteilhaft Gelenke, insbesondere Festkörpergelenke umfassen.

Somit umfasst bei einer besonders bevorzugten Ausführungsform der Erfindung die Einrichtung zur Übersetzung von Distanzänderungen eine Anordnung mit Gelenken, vorzugsweise mit Festkörpergelenken. Durch die Gelenke, wird im Wesentlichen ein Übersetzungsverhältnis zwischen der vom Sensor erfassten und/oder gemessenen Wegänderung und der auf die Vorrichtung ausgeübten Wegänderung definiert.

Typischerweise ist das Übersetzungsverhältnis nichtlinear. Gemäß einer weiteren Ausführungsform der Vorrichtung kann das Übersetzungsverhältnis jedoch in einfacher Weise linear approximiert werden. Mit anderen Worten wird dazu der Messwert linear in einen Abstandswert umgerechnet.Gemäß noch einer Ausführungsform der Erfindung kann ein nichtlineares Übersetzungsverhältnis jedoch mit einer entsprechend nichtlinearen Kennlinie berücksichtigt werden. Dementsprechend werden die Messwerte mit einer nichtlinearen Kennlinie in Abstandswerte umgerechnet. Besonders bevorzugt kann die Einrichtung zur Übersetzung von Distanzänderungen symmetrische, vorzugsweise spiegelsymmetrisch angeordnete Arme und Gelenke aufweisen, wobei der Sensor bei einer Distanzänderung vorteilhaft an einem Arm angeordnet relativ zum anderen Arm bewegt wird.

Eine weitere Ausführungsform der Vorrichtung sieht vor, dass die Einrichtung zur Übersetzung von Distanzänderungen Bleche umfasst, die, vorzugsweise gefräste oder erodierte, Ausnehmungen aufweisen, die wiederum Festkörpergelenke definieren.

Vorteilhaft können die Bleche zwischen zwei Befestigungsblöcken angeordnet und beispielsweise an diese angeschweißt, vorzugsweise lasergeschweißt sein. Laserschweißen kann fertigungstechnisch erhebliche Vorteile realisieren. Bevorzugt können die Bleche und die Befestigungsblöcke durch Fräsen aus Vollmaterial hergestellt werden. Dies schließt jedoch andere Herstellungsverfahren nicht aus.

Eine weitere bevorzugte Ausführungsform der Erfindung umfasst eine Anordnung mit mehr als einer Vorrichtung zur Erfassung und/oder Messung von Distanzen und/oder Distanzänderungen, wie vorstehend beschrieben. Dabei kann zumindest eine erste Vorrichtung zur Erfassung und/oder Messung von Distanzen und/oder Distanzänderungen ein anderes Übersetzungsverhältnis und/oder einen anderen Messbereich aufweisen als eine zweite Vorrichtung zur Erfassung und/oder Messung von Distanzen und/oder Distanzänderungen. Bevorzugt kann der Messbereich durch Wahl der jeweiligen Vorrichtung erfolgen oder bestimmt/festgelegt werden.

Eine weitere Ausführungsform der Erfindung ist eine Vorrichtung zur Erfassung und/oder Messung von mechanischen Belastungen. Diese umfasst eine oder mehrere Vorrichtungen zur Erfassung und/oder Messung von Distanzen und/oder Distanzänderungen wie vorstehend beschrieben. Die Belastung eines Bauteils kann dann aus der erfassten und/oder gemessenen Distanzänderung des Bauteils abgeleitet oder berechnet werden.

Zweck dieser mechanischen Struktur in Kombination mit einer induktiven Wegmessung ist die erhöhte Messgenauigkeit, welche bei dem Stand der Technik nicht erreichbar ist.

Besonders bevorzugt ist der Sensor an einer Festkörpergelenkanordnung angeordnet. Anders ausgedrückt, kann der Sensor Teil einer Festkörpergelenkanordnung sein.

Eine besonders bevorzugte Ausführungsform der Erfindung sieht vor, dass die Vorrichtung zur Erfassung und/oder Messung und/oder Messung von Distanzen und/oder Distanzänderungen in Form von Längenänderungen eines Bauteils unter Belastung, eine mit dem Bauteil fest verbundene Einrichtung zur Erfassung und/oder Messung der Längenänderungen mittels mechanischer Übersetzungsstrukturen zur Übersetzung und Verstärkung tatsächlicher Längenänderungen umfasst. Außerdem weist sie zumindest einen Sensor zur Erfassung und/oder Messung der übersetzten Längenänderungen auf sowie eine Aufzeichnungs-und/oder Auswertungseinrichtung zur Aufzeichnung und/oder Auswertung der übersetzten Längenänderungen.

Die mechanischen Übersetzungsstrukturen umfassen erfindungsgemäß Festkörpergelenke, die zum einen die Übersetzung von sehr kleinen Längenänderungen, beispielsweise im nm- oder µm-Bereich erlauben und andererseits auch sehr verschleißresistent sind.

Erfindungsgemäß umfassen die mechanische Übersetzungsstrukturen Festkörpergelenkanordnungen, die aus jeweils mehreren Festkörpergelenken bestehen oder diese umfassen. Eine solche Festkörpergelenkanordnung ermöglicht vorteilhaft ein Design der Auslenkung durch die Übersetzung.

Dabei können die Festkörpergelenkanordnungen jeweils ein oder mehrere Festkörpergelenke, beispielsweise in Form von in einem Streifen oder Materialstreifen, vorzugsweise in einem Blechstreifen ausgebildeten Ausnehmungen aufweisen. Die Ausnehmungen öffnen sich dann vorzugsweise zu der einen oder anderen Längskante des Blechstreifens und verformen sich bei Belastung des Bauteils elastisch. Selbstverständlich sind auch andere Materialien denkbar, aus denen die Festkörpergelenkanordnungen hergestellt werden können. Diese sind dem Fachmann bekannt.

Gemäß einer weiteren bevorzugten Ausführungsform der Erfindung umfasst die Einrichtung zur Erfassung und/oder Messung der Längenänderung zwei fest mit dem Bauteil verbundenen Blöcke oder Befestigungsblöcke, wobei die Festkörpergelenkanordnungen ihrerseits fest mit den Befestigungsblöcken verbunden sind. So entsteht eine kraftschlüssige Verbindung zwischen der Vorrichtung und dem Bauteil, die eine exakte oder genaue Bestimmung oder Messung der Verformung des Bauteils erlaubt.

Das Verhältnis zwischen tatsächlicher und übersetzter Längenänderung kann linear oder zumindest bereichsweise auch nichtlinear sein.

Die Einrichtung zur Übersetzung von Distanzänderungen oder die mechanischen Übersetzungsstrukturen sind dazu eingerichtet, bei einer Längenänderung infolge der Belastung des Bauteils in x-Richtung, beziehungsweise allgemein in Kraftrichtung oder entlang einer ersten Richtung eine Übersetzung der Längenänderung entlang einer zweiten Richtung, insbesondere in y-Richtung, die einen Winkel zur x-Richtung aufweist, auszuführen. Dabei ist die Längenänderung in der zweiten Richtung, also die übersetzte Längenänderung, um einen Faktor größer als die Längenänderung entlang der ersten Richtung. Aufgrund dieser Vergrößerung der zu vermessenden oder zu ermittelnden Distanz ist eine erhöhte Messgenauigkeit möglich, da der Messfehler im Vergleich zur vermessenen Distanz geringer wird.

Erfindungsgemäß beträgt der Winkel zwischen x- und y-Richtung, beziehungsweise zwischen der ersten und der zweiten Richtung 90° oder jedenfalls im Wesentlichen 90°.

Eine besonders bevorzugt Vorrichtung umfasst
- zwei spiegelsymmetrisch, beabstandet zueinander angeordnete Festkörpergelenkanordnungen, die an ihren Breitseiten mit Befestigunsblöcken fest verbunden sind, die ihrerseits mit dem Bauteil fest verbindbar sind, '
- zumindest einen Sensor, der an einer ersten Festköpergelenkanordnung derart angeordnet ist, dass er in Richtung der anderen Festkörpergelenkanordnung ausgerichtet ist, um eine Längenänderung zwischen der ersten und der anderen Festkörpergelenkanordnung zu erfassen, sowie
- eine Aufzeichnungs- und/oder Auswertungseinrichtung.

Eine Vorrichtung zur Erfassung und/oder Messungen von Distanzen und/oder Distanzänderungen, wie sie vorstehend mit allen ihren möglichen Merkmalen beschrieben wurde, kann zur Erfassung und/oder Messung einer auf das Bauteil einwirkenden mechanischen Belastung, insbesondere in Form von Zug- und/oder Druckbeanspruchungen, verwendet werden. Dazu werden die erfassten und/oder gemessenen Distanzänderungen in Bezug zur einwirkenden Belastung gesetzt.

Neben der Vorrichtung umfasst die Erfindung gemäß Anspruch 9 auch ein Verfahren zur Erfassung und/oder Messung von Distanzänderungen in Form von Längenänderungen eines Bauteils unter Belastung.

Besonders bevorzugt werden Verformungen des Bauteils in Form von Längenänderungen aufgrund der Belastung des Bauteils ermittelt, wobei
- eine tatsächliche Längenänderung des Bauteils aufgrund der Verformung mittels einer Einrichtung zur mechanischen Verstärkung von Distanzänderungen verstärkt wird,
- die verstärkte Längenänderung ermittelt wird, indem eine Distanz innerhalb der Einrichtung zur mechanischen Übersetzung von Distanzänderungen mittels zumindest eines Sensors erfasst wird, und
- die erfasste Distanz zu einer Eichdistanz in Relation gesetzt wird, wobei die Eichdistanz der Distanz innerhalb der Einrichtung zur mechanischen Übersetzung von Distanzänderungen ohne Belastung entspricht, und aus der Relation zwischen erfasster Distanz und Eichdistanz die verstärkte Distanzänderung ermittelt wird, und wobei
- die verstärkte Distanzänderung als Maß für die tatsächliche Distanzänderung des Bauteils und/oder die Belastung des Bauteils verwendet wird.

Die Erfindung wird nachfolgend anhand bevorzugter Ausführungsformen und unter Bezugnahme auf die beigeschlossenen Zeichnungen detaillierter beschrieben.

Es zeigen
- Fig. 1:: eine typische Messaufgabe, wie diese bei der Messung mechanischer Belastungen oder auch beim Belastungsmonitoring auftreten kann,
- Fig. 2:: eine herkömmliche Vorrichtung zur Erfassung und/oder Messung von Distanzen,
- Fig. 3:: eine bevorzugte Ausführungsform einer erfindungsgemäßen Vorrichtung zur Erfassung und/oder Messung von Distanzen und/oder Distanzänderungen, bzw. Vorrichtung zur Erfassung und/oder Messung von mechanischen Belastungen.
- Fig. 4:: zeigt schematisch die Funktionsweise der Übersetzung von Längenänderungen mittels einer Anordnung von Festkörpergelenken.
- Fig. 5A: zeigt eine Windturbine mit einer erfindungsgemäßen Vorrichtung.
- Fig. 5B: eine spezielle Ausführungsform zur Belastungsmessung an der Rotorwelle einer Windturbine,
- Fig. 6 bis 8: Ausführungsbeispiele von autarken Sensoren.

### Detaillierte Beschreibung bevorzugter Ausführungsformen

Bei der nachfolgenden Beschreibung soll der Begriff der Messung die Messung der benannten Größe, somit entweder einer Distanz, einer Distanzänderung oder einer Belastung bzw. einer Belastungsänderung wiedergeben.

Der Begriff der Erfassung bezeichnet die Messung oder Erkennung zumindest eines wertes durch den jeweiligen Sensor, wie beispielsweise eines Grenzwertes.

Bei vielen Anwendungen kann es ausreichen, wenn Grenzwerte sicher erfasst werden und folglich ein Sensor zur Erfassung genügen.

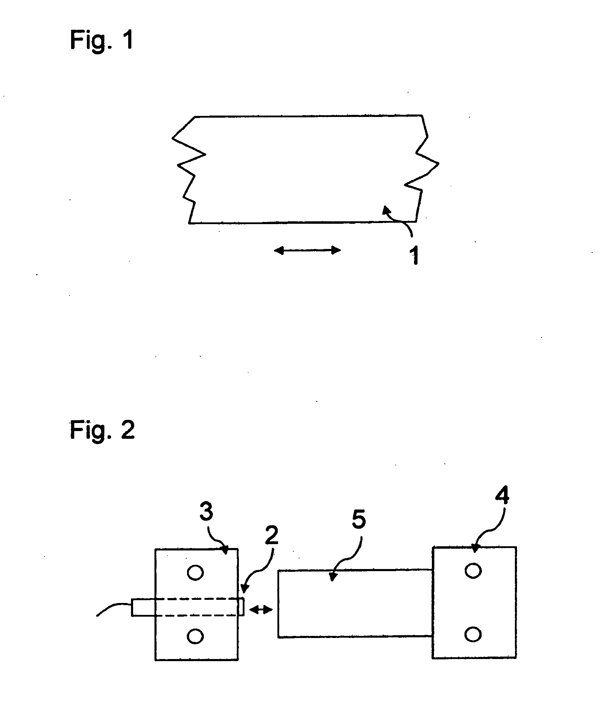

Figur 1 zeigt eine typische Messaufgabe, wie diese bei der Messung mechanischer Belastungen oder auch beim Belastungsmonitoring auftreten kann. Es wird hierbei ein Körper 1 durch Krafteinwirkung und somit durch die Einwirkung einer Belastung um einen bestimmten Wert gestaucht oder gedehnt, welcher beispielhaft unter dem Körper 1 zwischen zwei Pfeilen als Strecke dargestellt ist.

Figur 2 zeigt eine herkömmliche Vorrichtung zur Erfassung und/oder Messung von Distanzen, bei welcher ein Sensor 2 zwischen zwei Befestigungsblöcken 3, 4 angeordnet ist und einen Gegenkörper 5, dessen Bewegung vom Sensor 2 erfasst wird.

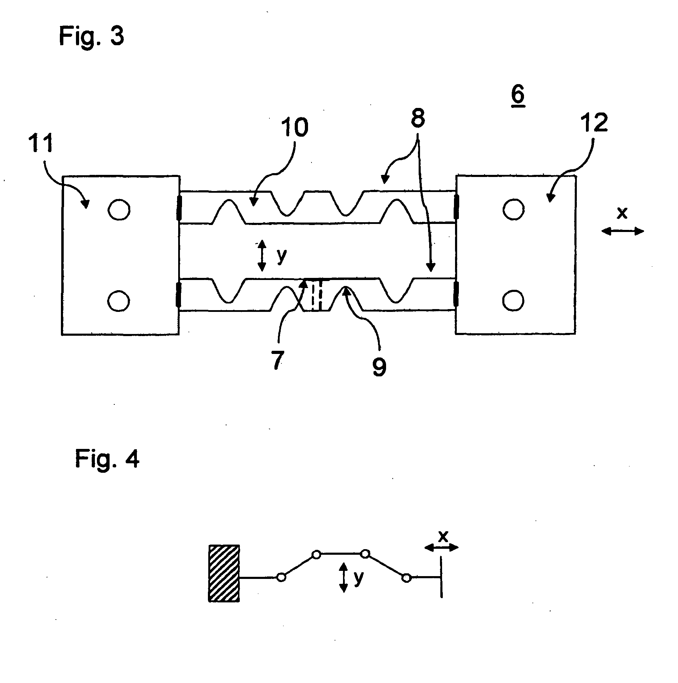

Nachfolgend wird auf Figur 3 Bezug genommen, welche eine bevorzugte Ausführungsform einer erfindungsgemäßen Vorrichtung 1 zur Erfassung und/oder Messung von Distanzen und/oder Distanzänderungen, bzw. eine Vorrichtung zur Erfassung und/oder Messung von mechanischen Belastungen zeigt.

Diese im Ganzen mit dem Bezugszeichen 6 versehene Vorrichtung zur Erfassung und/oder Messung von Distanzen und/oder Distanzänderungen, umfasst einen Sensor 7 zur Erfassung und/oder Messung von Distanzen und/oder Distanzänderungen, sowie eine Einrichtung zur Übersetzung von Distanzänderungen 8.

Diese Einrichtung zur Übersetzung von Distanzänderungen 8 weist eine Anordnung mit Gelenken, vorzugsweise Festkörpergelenken auf, durch welche im Wesentlichen ein Übersetzungsverhältnis zwischen der vom Sensor erfassten und/oder gemessenen Wegänderung und der auf die Vorrichtung ausgeübten Wegänderung definiert wird.

Lediglich beispielhaft und um der Klarheit willen ist nur ein Gelenk mit dem Bezugszeichen 9 versehen. Dieses Gelenk ist eine Ausnehmung oder Verengung innerhalb eines Blechs oder Festkörpers 10.

Das Übersetzungsverhältnis zwischen der x-Richtung und der y-Richtung ist typischerweise leicht nichtlinear,. Hierbei definiert die x-Richtung die Messrichtung der Vorrichtung und die y-Richtung die Richtung der übersetzten Bewegung, welche der Sensor 7 erfasst. Sind die Gelenke nahezu entlang einer Linie ausgerichtet, so ergibt sich ein größeres Übersetzungsverhältnis, verglichen mit einer Stellung, bei welcher die Gelenke quer zur Belastungsrichtung versetzt sind.

Ferner kann das Übersetzungsverhältnis zumindest bereichsweise nichtlinear sein, wenn beispielsweise plastische Deformationen, insbesondere der Bleche oder Festkörper 10, die die Gelenke umfassen, auftreten oder die Länge der jeweiligen Arme zwischen den Festkörpergelenken 9 ein solches Verhältnis erzeugt.

Bei der in Figur 3 dargestellten bevorzugten Ausführungsform ist die Einrichtung zur Übersetzung von Distanzänderungen 8 symmetrisch ausgebildet und weist spiegelsymmetrisch angeordnete Arme und Gelenke 9 auf.

Der Sensor 7 ist an einem Arm angeordnet und wird bei einer Distanzänderung in Richtung x relativ zum anderen Arm in Richtung y dem Übersetzungsverhältnis entsprechend bewegt.

Bei einer ersten bevorzugten Ausführungsform sind die Bleche zwischen zwei Befestigungsblöcken 11, 12 angeordnet und an diese lasergeschweißt.

Bei einer weiteren erfindungsgemäßen Ausführungsform sind die Bleche 10 und die Befestigungsblöcke 11, 12 durch Fräsen aus Vollmaterial hergestellt.

Fig. 4 zeigt schematisch die Funktionsweise der Übersetzung von Längenänderungen mittels einer Anordnung von Festkörpergelenken. Wie anhand von Fig. 4 zu erkennen ist, sind die Gelenke 9 in Richtung quer zur Richtung x, entlang derer die Längenänderungen aufgeprägt werden, versetzt angeordnet. Dies führt dazu, dass auf eines oder mehrere der Gelenke 9 und/oder auf zumindest ein Segment 14 zwischen zwei Gelenken 9 bei einer Längenänderung entlang der Richtung x eine Auslenkung entlang der Richtung y quer zur Richtung x erfolgt. Das Übersetzungsverhältnis der Bewegungen entlang der beiden Richtungen x, y wird durch das Verhältnis zwischen dem Abstand der Gelenke 9 in Richtung x zum Versatz 15 bestimmt und kann entsprechend gewählt werden. Vorzugsweise wird der Abstand zwischen zwei Gelenken 9 mindestens doppelt so groß gewählt wie deren Versatz seitlich zur Richtung x, entlang welcher die Längenänderung aufgeprägt wird.

Die Erfindung umfasst ferner auch eine Vorrichtung zur Erfassung und/oder Messung von Distanzen und/oder Distanzänderungen 6, mit mehr als einer Vorrichtung, wie diese vorstehend beschrieben wurde. Insbesondere können zwei, drei oder mehrere dieser Vorrichtungen 6 vorgesehen sein, um Belastungen und/oder Distanzänderungen, die in verschiedenen Richtungen wirken, erfassen zu können.

Bei dieser weiteren Ausführungsform ist zumindest eine erste Vorrichtung zur Erfassung und/oder Messung von Distanzen und/oder Distanzänderungen 6 vorhanden, die ein anderes Übersetzungsverhältnis und oder einen anderen Messbereich aufweist als eine zweite Vorrichtung zur Erfassung und/oder Messung von Distanzen und/oder Distanzänderungen 6, wobei die Wahl des Messbereichs durch Wahl der jeweiligen Vorrichtung erfolgen kann.

Eine erfindungsgemäße Vorrichtung zur Erfassung und/oder Messung von mechanischen Belastungen, weist eine Vorrichtung oder mehrere Vorrichtungen zur Erfassung und/oder Messung von Distanzen und/oder Distanzänderungen 6 auf, wie diese vorstehend beschrieben wurden. Vorteilhaft ist mit der Erfindung die Übersetzungsstruktur im Wesentlichen beliebig zu dimensionieren, befindet sich die Übersetzungsstruktur und die für die physikalische Messprinzipien nötigen Einrichtungen in einem Sensor.

Der Messkopf kann in der Übersetzungsstruktur wahlweise integriert sein, um eine noch höhere Genauigkeit zu erzielen.

In weiterer Ausgestaltung enthält der Sensor eine Pull-Down Einrichtung oder eigene Belastungseinrichtung, um eine mechanische Verformung (Defekt des Sensors) zu ermitteln. Es kann ferner eine Sicherheitsstruktur vorgesehen sein, um den Sensor vor Überbelastungen zu schützen. Ein Alarmausgang kann dann bei Überlast aktiviert werden.

Eine Memory Funktion von Messungen ist ferner für viele Anwendungen hilfreich, insbesondere zur Eichung oder Skalierung der jeweiligen Messgrößen.

Eine intelligente Ausgestaltung der Erfindung verfügt ferner über eine Einrichtung zum selbst-Auswählen von Messbereichen über verschiedene Übersetzungsstrukturen (vorzugsweise mit Begrenzungsstrukturen wegen Belastungszerstörungen).

Die erfindungsgemäßen Vorrichtungen sind modular aufbaubar. Da erfindungsgemäß im Wesentlichen starre Strukturen verwendet werden, tritt auch nahezu kein Verschleiß auf.

Ein besonders geeigneter Einsatzbereich für die erfindungsgemäße Vorrichtung ist auch die Messung dynamischer Belastungen an Bauteilen. Insbesondere kann die erfindungsgemäße Vorrichtung dabei auch dazu verwendet werden, mechanische Belastungen rotierender Teile einer Windturbine zu erfassen. Demgemäß betrifft die Erfindung auch eine Windturbine mit einer erfindungsgemäßen Vorrichtung zur Erfassung und/oder Messung von Distanzen und/oder Distanzänderungen in Form von Längenänderungen eines Bauteils unter Belastung, wobei die erfindungsgemäße Vorrichtung an einem rotierenden Teil der Windturbine befestigt ist, sowie die Verwendung einer erfindungsgemäßen Vorrichtung zur Erfassung und/oder Messung von Distanzen und/oder Distanzänderungen in Form von Längenänderungen eines Bauteils unter Belastung für die Messung von mechanischen Belastungen an rotierenden Elementen von Windturbinen. Die Distanzänderungen können dabei durch jegliche, durch mechanische Belastungen induzierte Deformationen des rotierenden Elements hervorgerufen werden.

Eine an die Vorrichtung angeschlossene Auswerteeinrichtung kann dann unter anderem Überlastungen erkennen. Unter Ansprechen auf die gemessene mechanische Belastung, oder allgemeiner unter Berücksichtigung der gemessenen mechanischen Belastung des rotierenden Teils der Windturbine kann dann mittels einer Steuervorrichtung der Windturbine beispielsweise der Anstellwinkel der Rotorblätter geändert werden. Ebenfalls kann die erfindungsgemäße Vorrichtung auch in einfacherer Ausführungsform als Belastungsmonitor verwendet werden, dessen Messwerte im Bedarfsfall abgerufen oder in zeitlichen Abständen fortlaufend aufgezeichnet werden.

Als rotierende Teile kommen insbesondere die Rotorblätter, die Rotornabe, die Verbindung der Rotorblätter an der Rotornabe und die Rotorwelle in Betracht. Besonders auch an der Rotorwelle treten hohe mechanische Belastungen über die mit langem Hebelarm durch die Rotorblätter ausgeübten Kräfte auf. Gemäß einer besonderen Ausführungsform der Erfindung ist demgemäß die Verwendung der erfindungsgemäßen Vorrichtung zur Messung der mechanischen Belastung der Rotorwelle einer Windturbine vorgesehen.

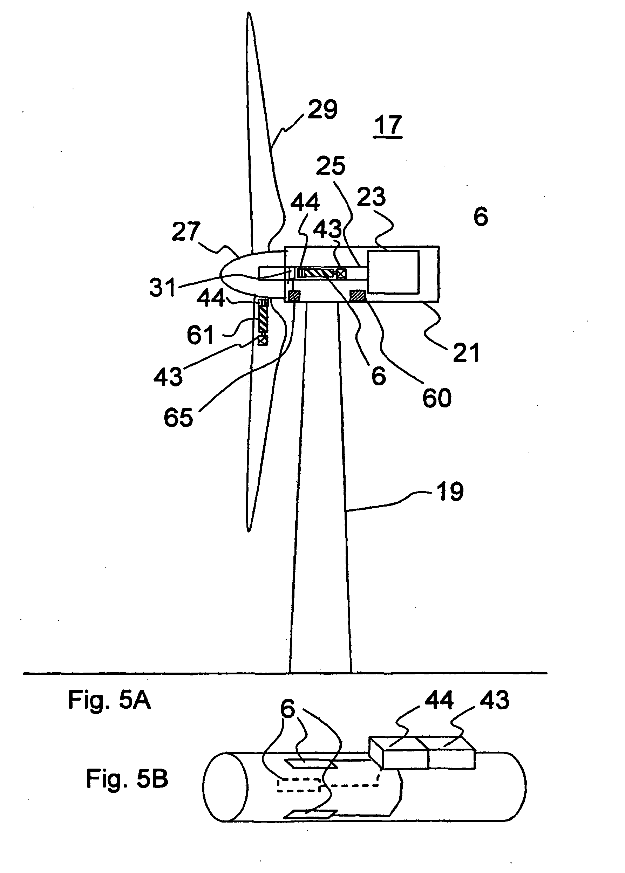

Ein Ausführungsbeispiel zeigt die in Fig. 5A dargestellte Windturbine 17. Auf einem Turm 19 ist die den Generator 23 beherbergende Gondel 21 in Windrichtung drehbar gehaltert. Der Generator 23 wird über die Rotorwelle 25 direkt oder über ein nicht dargestelltes Getriebe angetrieben. An der Rotorwelle 25 ist die Rotornabe 27 befestigt, welche wiederum die Rotorblätter 29 trägt. Auf der Rotorwelle 25 mitrotierend befestigt ist eine erfindungsgemäße Vorrichtung 6. Mit der Vorrichtung können Dehnungen, Stauchungen, Biegungen und Torsionen der Rotorwelle erfasst werden. Um die Messwerte der Vorrichtung 6 auszuwerten, ist eine Auswerteeinrichtung 60 vorgesehen, die bei dem in Fig. 5A gezeigten Beispiel in der Gondel 21 angeordnet ist, und an welche die Messwerte der Vorrichtung 6 übertragen werden. Die Befestigung der Vorrichtung 6 auf der Rotorwelle 25 kann durch Kleben, magnetische Fixierung, durch Verschrauben oder Verrasten erfolgen. Gemäß noch einer vorteilhaften Ausführungsform der Erfindung kann die Vorrichtung 6 auch mechanisch ohne Zusatzelemente am rotierenden Teil, wie etwa der Welle fixiert werden. Ein geeignetes Befestigungsmittel dafür sind beispielsweise Klemmringe.

Es können auch, je nach den zu messenden Größen mehrere Vorrichtungen 6 eingesetzt werden, deren Messwerte unabhängig voneinander oder in Abhängigkeit zueinander ausgewertet werden können. Anders als in Fig. 5A dargestellt, können die Vorrichtung 6 und die Auswerteeinrichtung 60 auch eine bauliche Einheit bilden. Mit anderen Worten kann allgemein die Auswerteeirichtung 60 Bestandteil der erfindungsgemäßen Vorrichtung 6 sein.

Es können noch weitere Vorrichtungen 6 an rotierenden Teilen der Windturbine 17 vorgesehen werden, beispielsweise wie in Fig. 5A gezeigt, eine weitere erfindungsgemä0e Vorrichtung 61 zur Erfassung und/oder Messung von Distanzen und/oder Distanzänderungen an einem Rotorblatt 29.

Um die Messwerte oder Daten an die Auswerteeinrichtung 60 zu übertragen und/oder die Vorrichtung 6, beziehungsweise die weitere Vorrichtung 61 mit elektrischer Energie einer Versorgungsspannungsquelle 65 zu versorgen, kann beispielsweise eine Drahtverbindung vorgesehen werden. Dazu kann der elektrische Kontakt zur rotierenden Vorrichtung 6, beziehungsweise 61 über Schleifkontakte 31 an der Welle 25 hergestellt werden.

Eine andere Möglichkeit besteht allgemein darin, Messwerte von der im Betrieb der Windturbine rotierenden Vorrichtung 6, 61 an Auswerteeinrichtung 60 drahtlos zu übertragen. Letztere Möglichkeit bietet den Vorteil, dass der Montageaufwand erheblich reduziert wird. Dies ist in verstärktem Masse insbesondere auch dann der Fall, wenn die Vorrichtung 6 in Bezug auf die elektrische Energie autark ist. Dazu ist in Weiterbildung der Erfindung vorgesehen, dass die Vorrichtung 6, 61 einen autarken Generator 43 umfasst, welcher Energie aus der Umgebung des Generators in elektrische Energie wandelt. In Weiterbildung der Erfindung ist demgemäß eine auf einem rotierenden Teil, insbesondere einer Windturbine angeordnete erfindungsgemäße Vorrichtung 6 zur Erfassung und/oder Messung von Distanzen und/oder Distanzänderungen vorgesehen, die einen solchen autarken Generator 43, sowie eine Drahtlos-Übertragungseinrichtung 44 zum Senden von Messwerten und/oder Daten umfasst. Die Drahtlos-Übertragung kann beliebig elektromagnatisch, insbesondere per Funk oder optisch, oder auch mit Ultraschall erfolgen.

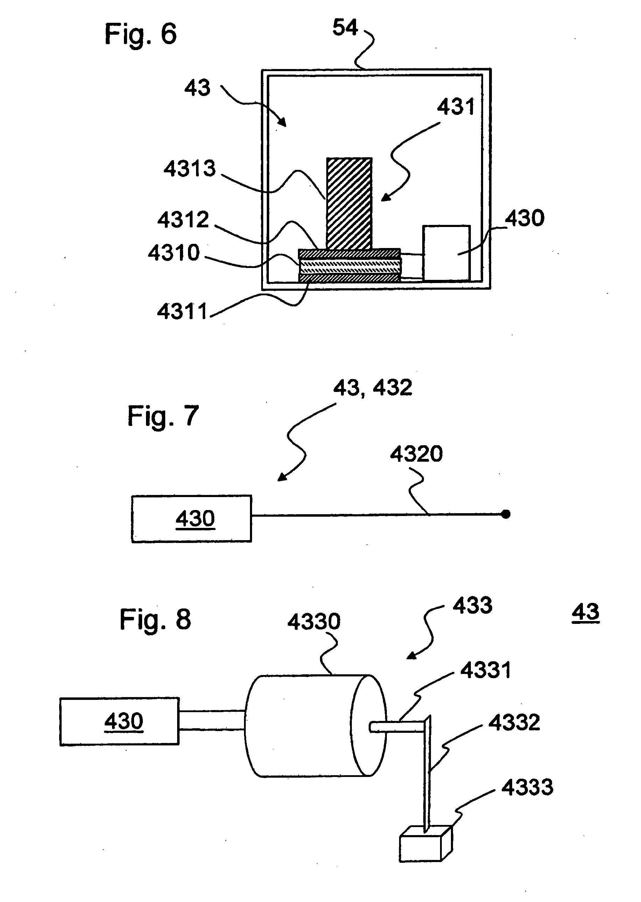

In den Fig. 6 bis 8 sind verschiedene Ausführungsbeispiele von autarken Generatoren 43 schematisch dargestellt. Vorzugsweise ist allgemein, ohne Beschränkung auf die in den Figuren dargestellten Ausführungsbeispiele aufgrund des autarken Generators 43 auch die gesamte Stromversorgung autark. Gemäß einer anderen Weiterbildung kann der autarke Generator 43 aber auch zur Absicherung einer Stromversorgung vorgesehen sein, die dann elektrische Energie aus einer weiteren Quelle, insbesondere über elektrische Leitungen bezieht, also etwa wie in Fig. 5A dargestellt, von einer Versorgungsspannungsquelle 65 über einen oder mehrere Schleifkontakte 31.

Fig. 5B zeigt ein Ausführungsbeispiel zur Messung von Belastungen an der Rotorwelle 25 für die Steuerung der Windturbine. Auf der Rotorwelle 25 sind in Umfangsrichtung verteilt mehrere Längenänderungssensoren, im Ausführungsbeispiel wieder Vorrichtungen 6 zur Erfassung und/oder Messung von Distanzen und/oder Distanzänderungen befestigt. Die Vorrichtungen 6 sind über Kabelverbindungen mit einer mit der Rotorwelle 25 mitrotierenden Drahtlos-Übertragungsvorrichtung 44 und einem ebenfalls mit der Rotorwelle 25 mitrotierenden autarken Generator 43 verbunden. Der autarke Generator 43 versorgt sowohl die Vorrichtungen 6, als auch die Drahtlos-Übertragungsvorrichtung 44 mit elektrischer Energie. Damit ist die gesamte Messeinheit völlig energetisch autark und benötigt keinerlei Verkabelung zu externen Komponenten. Die von den Vorrichtungen 6 gemessenen Messwerte können auf diese Weise gesendet und von einer Steuervorrichtung mit Empfangseinrichtung für Drahtlos-Übertragung empfangen werden. Anhand der einzelnen Messwerte kann nun festgestellt werden, in welcher Richtung die Rotorachse momentan, beispielsweise durch ungleiche, von den Rotorblättern ausgeübte Kräfte belastet ist. Dies kann von der Steuereinrichtung dann dazu verwendet werden, individuell den Anstellwinkel der Rotorblätter 29 einzustellen.

Anders als in Fig. 5B gezeigt, kann entsprechend zu Fig. 5A auch jede der Vorrichtungen 6 einen eigenen autarken Generator 43 und/oder eine Drahtlos-Übertragungseinrichtung 44 aufweisen.

Fig. 6 zeigt einen autarken Generator 43, der einen piezoelektrischen Wandler 431 umfasst. Der piezoelektrische Wandler 431 umfasst ein piezoelektrisches Element 4310, beispielsweise eine Piezokeramik. Das piezoelektrische Element 4310 ist mit zwei Elektroden 4311, 4312 zum Abgriff der Piezospannung versehen. Für die Vorrichtung 61 kann der Wandler im Inneren des Rotorflügels, beispielsweise wie gezeigt, in einem Holm 54 befestigt sein.

Ein am Verbund des piezoelektrischen Elements 4310 und den Elektroden 4311, 4312 befestigtes Gewicht 4313 sorgt aufgrund seiner Massenträgheit dafür, dass Vibrationen zu einer periodischen Kompression des piezoelektrischen Elements 4310 und damit zu einer abgreifbaren, entsprechend den Vibrationen wechselnden Piezo-Spannung führen. Eine an die Elektroden 4311, 4312 angeschlossene elektronische Schaltung 430 bereitet die Piezo-Spannung auf eine benutzbare Spannung, beispielsweise eine definierte Gleichspannung auf.

Fig. 7 zeigt ein Beispiel eines Wandlers 432 für elektromagnetische Wellen. Dieser Wandler 432 weist eine Antenne 4320 auf. Die Schaltung 430 umfasst hier Verstärkerschaltung zur Verstärkuung der über die Antenne 4320 empfangenen Funk- oder Radiowellen und eine Gleichrichterschaltung.

In Fig. 8 ist ein Beispiel eines autarken Generators 43 mit einem dynamoelektrischen Wandler 433 dargestellt. Diese Bauform eignet sich besonders zum Einsatz in einem rotierenden Objekt, wie insbesondere im Rotor einer Windturbine oder deren Rotorwelle 25. Der Wandler 433 umfasst einen Drehgenerator 4330 mit einer drehbaren Welle 4331. An der Welle 4331 ist ein Arm 4332 mit einem Gewicht 4333 vorgesehen. Wird der Drehgenerator im Rotor so montiert, dass die Welle 4331 in Richtung der Rotationsachse der Windturbine weist, so wird die Drehung der Windturbine auf die Welle übertragen, da der Arm 4332 durch die am Gewicht 4333 angreifende Schwerkraft nach unten ausgerichtet wird, so dass sich der Drehgenerator um die Welle 4331 dreht.

Der Drehgenerator kann auf diese Weise dynamoelektrisch elektrische Energie erzeugen, die von der Schaltung 430 aufbereitet wird. Das Prinzip dieses Generators setzt voraus, dass die Fliehkraft am Montageort die Schwerkraft nicht überschreitet. Ist dies, beispielsweise an den Flügelenden dennoch der Fall, können aber ebenso dynamoelektrische Generatoren verwendet werden, die entweder aus Vibrationen über ein bewegliches Trägheitselement Energie schöpfen oder aber ebenfalls über ein beispielsweise federnd bewegliches Trägheitselement Bewegungsenergie aus dem sich in Richtung und Größe durch Einwirkung der Schwerkraft ändernden Kraftvektor erzeugen und umsetzen.

Das Prinzip der autarken Energieversorgung einer Vorrichtung zur Messung von Belastungen durch Längenänderungen in oder an rotierenden Teilen einer Windturbine kann auch mit anderen Sensortypen, als dem erfindungsgemäßen induktiven Sensor, beziehungsweise der Vorrichtung 6 realisiert werden. Es bietet sich hier der besondere Vorteil, dass in Verbindung mit einer Drahtlos-Übertragungseinrichtung jegliche Verkabelung mit externen, nicht mitrotierenden Einrichtungen entfallen kann.

Demgemäß betrifft die Erfindung auch allgemein eine Windturbine mit einem Rotor, wobei ein oder mehrere Längenänderungssensoren, beziehungsweise Vorrichtungen zur Erfassung und/oder Messung von Distanzen und/oder Distanzänderungen in Form von Längenänderungen eines Bauteils unter Belastung an oder in einem mit dem Rotor rotierenden Teil, beziehungsweise ,unter Einbeziehung der Rotorwelle, einem Teil des Rotors befestigt sind, um Längenänderungen unter Belastung des rotierenden Teils zu messen, und wobei der Längenänderungssensor, beziehungsweise die Vorrichtung zur Erfassung und/oder Messung von Distanzen und/oder Distanzänderungen elektrisch an einen ebenfalls mit dem rotierenden Teil mitrotierenden autarken Generator angeschlossen ist, welcher Energie aus der Umgebung des autarken Generators in elektrische Energie wandelt. Vorzugsweise ist wie gesagt eine mit dem rotierenden Teil mitrotierende Drahtlos-Übertragungseinrichtung vorgesehen, die Bestandteil des Längenänderungssensors sein kann oder mit diesem verbunden ist, wobei die Drahtlos-Übertragungseinrichtung eingerichtet ist, Messwerte und/oder Messdaten des Längenänderungssensors drahtlos zu übertragen. Demgemäß können die Vorrichtungen 6, 61, wie sie in den Fig. 5A und 5B dargestellt sind, auch durch andere Längenänderungssensoren ersetzt oder ergänzt werden. Solche Längenänderungssensoren können beispielsweise Dehnungsmessstreifen oder optische Sensoren sein.

### Bezugszeichen-Liste

- 1: Körper, Bauteil
- 2: Sensor
- 3: Befestigungsblock
- 4: Befestigungsblock
- 5: Gegenkörper
- 6, 61: Vorrichtung zur Erfassung und/oder Messung von Distanzen und/oder Distanzänderungen, bzw. eine Vorrichtung zur Erfassung und/oder Messung von mechanischen Belastungen
- 7: Sensor einer erfindungsgemäßen Ausführungsform
- 8: Einrichtung zur Übersetzung von Distanzänderungen
- 9: Gelenk
- 10: Festkörper, Blech
- 11: Befestigungsblock
- 12: Befestigungsblock
- 14: Segment zwischen zwei Gelenken 9
- 15: Versatz
- 17: Windturbine
- 19: Turm von 17
- 21: Gondel
- 23: Generator
- 25: Rotorwelle
- 27: Rotornabe
- 29: Rotorflügel
- 31: Schleifkontakt
- 43: Autarker Generator
- 44: Drahtlos-Übertragungseinrichtung
- 54: Holm
- 60: Auswerteeinrichtung
- 65: Versorgungsspannungsquelle
- 430: Schaltung
- 431: piezoelektrischer Wandler
- 432: Wandlers für elektromagnetische Wellen
- 433: dynamoelektrischer Wandler
- 4310: piezoelektrisches Element
- 4311, 4312: Elektroden
- 4313: Gewicht
- 4320: Antenne
- 4330: Drehgenerator
- 4331: drehbare Welle von 4330
- 4332: Arm
- 4333: Gewicht

## Patentansprüche

1. Vorrichtung zur Erfassung und/oder Messung von Distanzen und/oder Distanzänderungen (6) in Form von Längenänderungen eines Bauteils (1) unter Belastung, mit einer mit dem Bauteil (1) fest verbundenen Einrichtung zur Erfassung und/oder Messung der Längenänderung des Bauteils (1) mittels mechanischer Übersetzungsstrukturen (8) zur Übersetzung und Verstärkung der tatsächlichen Längenänderungen des Bauteiles (1) und zumindest einem Sensor (7) zur Erfassung und/oder Messung der übersetzten Längenänderung (y)
**dadurch gekennzeichnet, dass** die mechanischen Übersetzungsstrukturen (8) dazu eingerichtet sind, bei einer Längenänderung (x) infolge der Belastung des Bauteils (1) entlang einer ersten Richtung (x) eine Übersetzung der Längenänderung entlang einer zweiten Richtung (y), die einen Winkel zur ersten Richtung aufweist, auszuführen, wobei die Längenänderung in der zweiten Richtung (y) um einen Faktor größer ist, als die Längenänderung entlang der ersten Richtung (x), wobei der Winkel zwischen der ersten und zweiten Richtung im Wesentlichen 90° beträgt, wobei der zumindest ein Sensor (7) ein induktiver Sensor (7) ist, wobei der induktive Sensor (7) an einer Übersetzungsstruktur (8) angeordnet ist und mit dem induktiven Sensor (7) eine induktive Wegmessung ausführbar ist und die Vorrichtung (6) eine Aufzeichnungs- und/oder Auswertungseinrichtung zur Aufzeichnung und/oder Auswertung der übersetzten Längenänderungen (y) umfasst.

2. Vorrichtung (6) nach einem der vorstehenden Ansprüche, **dadurch gekennzeichnet, dass** die mechanischen Übersetzungsstrukturen (8) Festkörpergelenkanordnungen umfassen, die jeweils mehrere Festkörpergelenke (9) umfassen.

3. Vorrichtung (6) nach einem der vorstehenden Ansprüche, **dadurch gekennzeichnet, dass** die mechanischen Übersetzungsstrukturen (8) Festkörpergelenkanordnungen mit jeweils einem oder mehreren Festkörpergelenken (9) in Form von in einem Streifen (10), vorzugsweise einem Blechstreifen (10) ausgebildeten, Ausnehmungen umfassen, die sich vorzugsweise zu der einen oder anderen Längskante des Streifens (10) öffnen, und die sich bei Belastung des Bauteils (1) elastisch verformen.

4. Vorrichtung (6) nach einem der vorstehenden Ansprüche, **dadurch gekennzeichnet, dass** die Einrichtung zur Erfassung und/oder Messung der Längenänderung zwei fest mit dem Bauteil (1) verbundenen Befestigungsblöcke (11, 12) umfasst, wobei die Festkörpergelenkanordnungen ihrerseits fest mit den Befestigungsblöcken (11, 12) verbunden sind.

5. Vorrichtung (6) nach einem der vorstehenden Ansprüche mit zwei spiegelsymmetrisch, beabstandet zueinander angeordneten Festkörpergelenkanordnungen, die an ihren Breitseiten mit Befestigungsblöcken (11, 12) fest verbunden sind, die ihrerseits mit dem Bauteil (1) fest verbindbar sind, wobei der zumindest eine induktive Sensor (7) an einer ersten Festköpergelenkanordnung derart angeordnet ist, dass er in Richtung der zweiten Festkörpergelenkanordnung ausgerichtet ist, um eine Längenänderung zwischen der ersten und der zweiten Festkörpergelenkanordnung zu erfassen.

6. Verwendung einer Vorrichtung (6) nach einem der vorstehenden Ansprüche zur Erfassung und/oder Messung einer auf das Bauteil (1) einwirkenden mechanischen Belastung, insbesondere in Form von Zug- und/oder Druckbeanspruchungen.

7. Verwendung einer Vorrichtung (6) gemäß einem der Ansprüche 1 bis 6, zur Messung von mechanischen Belastungen an rotierenden Elementen von Windturbinen.

8. Verwendung einer Vorrichtung (6) gemäß vorstehendem Anspruch zur Messung der mechanischen Belastung der Rotorwelle einer Windturbine.

9. Verfahren zur Erfassung und/oder Messung von Distanzänderungen in Form von Längenänderungen eines Bauteils (1) unter Belastung mit einer mit dem Bauteil (1) fest verbundenen Einrichtung zur Erfassung und/oder Messung der Längenänderung des Bauteils (1) mittels mechanischer Übersetzungsstrukturen (8) zur Übersetzung und Verstärkung der tatsächlichen Längenänderungen des Bauteiles (1) und zumindest einem Sensor (7) zur Erfassung und/oder Messung der übersetzten Längenänderung (y)
**dadurch gekennzeichnet, dass**
die mechanischen Übersetzungsstrukturen (8) bei einer Längenänderung (x) infolge der Belastung des Bauteils (1) entlang einer ersten Richtung (x) eine Übersetzung der Längenänderung entlang einer zweiten Richtung (y), die einen Winkel zur ersten Richtung aufweist, ausführen, wobei die Längenänderung in der zweiten Richtung (y) verstärkt wird, wobei der Winkel zwischen der ersten und zweiten Richtung im Wesentlichen 90° beträgt, wobei der zumindest eine Sensor (7) ein induktiver Sensor (7) ist, der an einer Übersetzungsstruktur (8) angeordnet ist und die verstärkte Längenänderung mit einer induktiven Wegmessung erfasst und eine Aufzeichnungs- und/oder Auswertungseinrichtung die übersetzten Längenänderungen (y) erfasst und auswertet.

10. Verfahren nach Anspruch 10, **dadurch gekennzeichnet, dass**
- eine tatsächliche Längenänderung des Bauteils (1) aufgrund der Verformung mittels einer Einrichtung zur mechanischen Übersetzung von Distanzänderungen (8) verstärkt wird,
- die verstärkte Längenänderung ermittelt wird, indem eine Distanz innerhalb der Einrichtung zur mechanischen Übersetzung von Distanzänderungen (8) mittels des zumindest einen induktiven Sensors (7) erfasst wird, und
- die erfasste Distanz zu einer Eichdistanz in Relation gesetzt wird, wobei die Eichdistanz der Distanz innerhalb der Einrichtung zur mechanischen Übersetzung von Distanzänderungen (8) ohne Belastung entspricht, und aus der Relation zwischen erfasster Distanz und Eichdistanz die verstärkte Distanzänderung ermittelt wird, und wobei
- die verstärkte Distanzänderung als Maß für die tatsächliche Distanzänderung des Bauteils (1) und/oder die Belastung des Bauteils (1) verwendet wird.

## Claims

1. Device for detecting and/or measuring distances and/or changes in distance (6) in the form of changes in length of a component (1) under load, with a device permanently attached to the component (1) for detecting and/or measuring the change in length of the component (1) by means of mechanical transmission structures (8) for the transmission and amplification of the actual changes in length of the component (1) and at least one sensor (7) to detect and/or measure the transmitted change in length (y),
**characterized in that** the mechanical transmission structures (8) are set up in the event of a change in length (x) as a consequence of the load on the component (1) along a first direction (x) to perform a transmission of the change in length along a second direction (y), which is at an angle to the first direction, whereby the change in the length in the second direction (y) is greater by a factor than the change in direction along the first direction (x), whereby the angle between the first and the second direction is essentially 90°, whereby the at least one sensor (7) is an inductive sensor (7), whereby the inductive sensor (7) is mounted on a transmission structure (8) and an inductive displacement measurement can be carried out with the inductive sensor (7) and the device (6) comprises a recording and/or evaluation device for recording and/or evaluating the transmitted changes in the length (y).

2. Device (6) in accordance with one of the above Claims, **characterized in that** the mechanical transmission structures (8) comprise flexure hinge arrangements, each of which comprises several flexure hinges (9).

3. Device (6) in accordance with one of the above Claims, **characterized in that** the mechanical transmission structures (8) comprise flexure hinge arrangements with one or more flexure hinges (9) each in the form of recesses designed as a strip (10), preferably a sheet metal strip (10), which open up preferably to the one or the other longitudinal edge of the strip (10), and which deform elastically when the component (1) is under load.

4. Device (6) in accordance with one of the above Claims, **characterized in that** the device for detecting and/or measuring the change in length comprises two mounting blocks (11, 12) permanently attached to the component (1), whereby the flexure hinge arrangements are in turn permanently connected to the mounting blocks (11, 12).

5. Device (6) in accordance with one of the above Claims, with two flexure hinge arrangements which are arranged as mirror images of one another and at a distance from one another, and which on their broad sides are permanently attached to mounting blocks (11, 12) which in turn can be permanently attached to the component (1), whereby the at least one inductive sensor (7) is located on a first flexure hinge arrangement in such a way that it is aligned in the direction of the second flexure hinge arrangement in order to detect a change in length between the first and the second flexure hinge arrangements.

6. Use of a device (6) in accordance with one of the above Claims, to detect and/or measure a mechanical load acting on the component (1), in particular in the form of tensile and/or compressive loads.

7. Use of a device (6) in accordance with one of the Claims 1 to 6, for the measurement of mechanical loads on the rotating elements of wind turbines.

8. Use of a device (6) in accordance with the above Claim, for the measurement of the mechanical load on the rotor shaft of a wind turbine.

9. Method for detecting and/or measuring changes in distance in the form of changes in length of a component (1) under load, with a device permanently attached to the component (1) for detecting and/or measuring the change in length of the component (1) by means of mechanical transmission structures (8) for the transmission and amplification of the actual changes in length of the component (1) and at least one sensor (7) to detect and/or measure the transmitted change in length (y)
**characterized in that**
in the event of a change in length (x) as a consequence of the load on the component (1) along a first direction (x) the mechanical transmission structures (8) perform a transmission of the change in length along a second direction (y) which is at an angle to the first direction, whereby the change in the length is amplified in the second direction (y), whereby the angle between the first and the second angle is essentially 90°, whereby the at least one sensor (7) is an inductive sensor (7), which is mounted on one transmission structure (8) and which detects the amplified change in length with an inductive displacement measurement, and a recording and/or evaluation device records and/or evaluates the transmitted changes in length (y).

10. Process in accordance with claim 10, **characterized in that**
- an actual change in the length of the component (1) on account of deformation is amplified by means of a device for the mechanical transmission of changes in distance (8),
- the amplified change in length is determined **in that** a distance within the device for the mechanical transmission of changes in distance (8) is detected by means of the at least one inductive sensor (7), and
- the detected distance is set in relation to a calibrated distance, whereby the calibrated distance corresponds to the distance within the device for the mechanical transmission of changes in distance (8) without a load, and the amplified change in distance is determined from the relation between the detected distance and the calibrated distance, and whereby
- the amplified change in distance is used as a measure for the actual change in distance of the component (1) and/or the load on the component (1).

## Revendications

1. Dispositif permettant de détecter et/ou de mesurer des distances et/ou des modifications de distance (6) sous la forme de déformations linéaires d'un composant (1) sous une charge, avec une installation raccordée fermement au composant (1) permettant de détecter et/ou de mesurer la déformation linéaire du composant (1) au moyen de structures de transmission mécaniques (8) destinées à transmettre et renforcer les déformations linéaires effectives du composant (1) et au moins un détecteur (7) permettant de détecter et/ou de mesurer la déformation linéaire transmise (y)
**caractérisé en ce que** les structures de transmission mécaniques (8) sont conçues pour exécuter, lors d'une modification linéaire (x) en raison de la charge du composant (1) le long d'une première direction (x), une transmission de la déformation linéaire le long d'une seconde direction (y), qui forme un angle avec la première direction, la déformation linéaire dans la seconde direction (y) étant supérieure d'un facteur à la déformation linéaire le long de la première direction (x), l'angle entre la première et la seconde direction mesurant sensiblement 90°, le au moins un détecteur (7) étant un détecteur inductif (7), le détecteur inductif (7) étant disposé sur une structure de transmission (8) et le détecteur inductif (7) permettant de réaliser une mesure de trajectoire inductive et le dispositif (6) comprenant une installation d'enregistrement et/ou d'évaluation permettant d'enregistrer et/ou d'évaluer les déformations linéaires transmises (y).

2. Dispositif (6) selon l'une des revendications précédentes, **caractérisé en ce que** les structures de transmission mécaniques (8) comprennent des agencements d'articulation à corps solide qui comprennent chacun plusieurs articulations à corps solide (9).

3. Dispositif (6) selon l'une des revendications précédentes, **caractérisé en ce que** les structures de transmission mécaniques (8) comprennent des agencements d'articulation à corps solide présentant chacun une ou plusieurs articulations à corps solide (9) sous la forme d'évidements formés dans une bande (10), de préférence une bande de tôle (10), lesdits évidements s'ouvrant de préférence sur l'une ou l'autre arête longitudinale de la bande (10) et se déformant de manière élastique en cas de charge du composant (1).

4. Dispositif (6) selon l'une des revendications précédentes, **caractérisé en ce que** l'installation permettant de détecter et/ou de mesurer la déformation linéaire comprend deux blocs de fixation (11, 12) fermement raccordés au composant (1), les agencements d'articulation à corps solide étant raccordés, de leur côté, aux blocs de fixation (11, 12).

5. Dispositif (6) selon l'une des revendications précédentes présentant deux agencements d'articulation à corps solide disposés à distance l'un de l'autre de manière symétrique, qui sont fermement raccordés sur leurs côtés larges aux blocs de fixation (11, 12), qui de leur côté peuvent être raccordés au composant (1), le au moins un détecteur inductif (7) étant disposés sur un premier agencement d'articulation à corps solide de telle sorte qu'il est orienté dans la direction du second agencement d'articulation à corps solide pour détecter une déformation linéaire entre le premier et le second agencement d'articulation à corps solide.

6. Utilisation d'un dispositif (6) selon l'une des revendications précédentes, pour détecter et/ou mesurer une charge mécanique agissant sur le composant (1), en particulier sous la forme d'efforts de traction et/ou de compression.

7. Utilisation d'un dispositif (6) selon l'une des revendications 1 à 6, pour mesurer les charges mécaniques sur des éléments rotatifs d'éoliennes.

8. Utilisation d'un dispositif (6) selon la revendication précédente pour mesurer la charge mécanique de l'axe de rotor d'une éolienne.

9. Dispositif permettant de détecter et/ou de mesurer des modifications de distance sous la forme de déformations linéaires d'un composant (1) sous une charge, avec une installation raccordée fermement au composant (1) permettant de détecter et/ou de mesurer la déformation linéaire du composant (1) au moyen de structures de transmission mécaniques (8) destinées à transmettre et renforcer les déformations linéaires effectives du composant (1) et au moins un détecteur (7) permettant de détecter et/ou de mesurer la déformation linéaire transmise (y)
**caractérisé en ce que**
les structures de transmission mécaniques (8) exécutent, lors d'une modification linéaire (x) en raison de la charge du composant (1) le long d'une première direction (x), une transmission de la déformation linéaire le long d'une seconde direction (y), qui forme un angle avec la première direction, la déformation linéaire dans la seconde direction (y) étant renforcée, l'angle entre la première et la seconde direction mesurant sensiblement 90°, leau moins un détecteur (7) étant un détecteur inductif (7) qui est disposé sur une structure de transmission (8) et détecte la déformation linéaire renforcée avec une mesure de trajectoire inductive et une installation d'enregistrement et/ou d'évaluation détecte et évalue les déformations linéaires transmises (y).

10. Procédé selon la revendication 10, **caractérisé en ce que**
- une déformation linéaire effective du composant (1) est renforcée en raison de la déformation au moyen d'une installation de transmission mécanique de modifications de distance (8),
- la déformation linéaire renforcée est déterminée en détectant une distance au sein de l'installation de transmission mécanique des modifications de distance (8) au moyen du au moins un détecteur inductif (7), et
- la distance détectée est mise en relation avec une distance d'étalonnage, la distance d'étalonnage correspondant à la distance au sein de l'installation de transmission mécanique des modifications de distance (8) sans charge, et la modification de distance renforcée étant déterminée à partir de la relation entre la distance détectée et la distance d'étalonnage, et
- la modification de distance renforcée est utilisée comme mesure pour la modification de distance effective du composant (1) et/ou la charge du composant (1).
